## Europäisches Patentamt

## European Patent Office

## Office européen des brevets

(11) Veröffentlichungsnummer: **0 213 522 B1**

# EUROPÄISCHE PATENTSCHRIFT

(45) Veröffentlichungstag der Patentschrift:
28.03.90

(51) Int. Cl.⁴: **C25D 13/10, C09D 5/44**

(21) Anmeldenummer: **86111358.7**

(22) Anmeldetag: **16.08.86**

(54) **Verwendung eines Mittels zur Einstellung einer konstanten Schichtstärke bei der kathodischen Elektrotauchlackierung.**

(30) Priorität: **29.08.85 DE 3530843**

(43) Veröffentlichungstag der Anmeldung:
**11.03.87 Patentblatt 87/11**

(45) Bekanntmachung des Hinweises auf die Patenterteilung:
**28.03.90 Patentblatt 90/13**

(84) Benannte Vertragsstaaten:
**AT BE DE FR GB IT NL SE**

(56) Entgegenhaltungen:
**EP-A- 0 120 466**
**EP-A- 0 121 837**
**EP-A- 0 149 156**

(73) Patentinhaber: **HOECHST AKTIENGESELLSCHAFT,
Postfach 80 03 20, D-6230 Frankfurt am Main 80(DE)**

(72) Erfinder: **Walz, Gerd, Dr., Pfingstbornstrasse 99,
D-6200 Wiesbaden(DE)**

**Beschreibung**

Bei der Beschichtung von Substraten nach dem kathodischen Elektrotauchlackier-Verfahren (KTL) ist es erwünscht, beim Abscheiden der Filme aus dem Bad eine über Wochen konstante Schichtstärke zu erhalten.

Es ist bekannt, daß die Regulierung der Schichtstärke mit Lösungsmitteln, die entweder nicht vollständig wassermischbar oder völlig unlöslich in Wasser sind, vorgenommen wird. Diese Lösungsmittel (z.B. Ethylenglykolmonohexylether, Phenoxypropanol 2,2,4-Trimethylpentandiol-l,3-Monoisobutyrat usw.) werden dem KTL-Ansatz zugesetzt.

Die Schichtstärke kann auch mit handelsüblichen Weichmachern, die unter Einbrennbedingungen kaum flüchtig sind, reguliert werden Beispiele hierfür sind Dioctylphthalat, Dibutylphthalat, n-Alkylester von Fettsäuren mit bis zu l8 C-Atomen im Alkylrest oder andere gebräuchliche Weichmacher.

Es ist auch bekannt, kathodische Elektrotauchlacke durch erhöhte Mengen obiger Zusätze derart in ihrer Schichtstärke zu verändern, daß sie als sogenannte Dickschichtbeschichtungen gelten (Schichtstärken zwischen 30 und 70 µm).

Der Einsatz von Lösungsmitteln hat jedoch den Nachteil, daß diese aus den offenen Bädern mehr oder weniger schnell verdunsten, daher ständig nachdosiert werden müssen, um die Bäder in ihrer Zusammensetzung konstant zu halten. Außerdem stellen diese besonders unter Einbrennbedingungen flüchtigen Lösungsmittel eine deutlich Umweltbelastung dar.

Beim Einsatz dieser Lösungsmittel zur Erzielung von dickeren Schichten sind die Verhältnisse in dieser Hinsicht noch ungünstiger wegen der erhöhten vorhandenen Mengen an diesen Verbindungen.

Werden dagegen Weichmacher, die im allgemeinen unter Einbrennbedingungen nicht oder kaum flüchtig sind, zur Regulierung der Schichtstärke oder zur Erzielung von Dickschichtbeschichtungen eingesetzt, ist zwar die Konstanz der Schichtstärke auch ohne Nachdosierung gewährleistet, außerdem sind die Umweltbelastungen durch derartige Verbindungen gering. Da diese Weichmacher aber im abgeschiedenen und gehärteten Film verbleiben beeinflussen sie dessen Qualität negativ, insbesondere werden die korrosionsschützenden Eingenschaften derartiger Filme stark verschlechtert.

Um die genannten Nachteile zu umgehen, war es wünschenswert, Mittel zur Erlangung einer konstanten Schichtstärke bei der kathodischen Elektrotauchlackierung zu finden, die einerseits nicht flüchtig oder nur schwer flüchtig sind, also weitgehend im abgeschiedenen und eingebrannten Film verbleiben, andererseits aber die technologischen Eigenschaften nicht negativ beeinflussen.

Gegenstand der Erfindung ist daher die Verwendung eines Reaktionsproduktes hergestellt aus primären Monoaminen und cyclischen Monocarbonaten im Molverhältnis von l:0,8 bis 0,8:l, vorzugsweise im Verhältnis l:l, unter Ausbildung einer Urethanbindung, zur Einstellung einer konstanten Schichtdicke bei der kathodischen Elektrotauchlackierung.

Als besonderen Vorteil des Einsatzes des Reaktionsproduktes in den Bädern der kathodischen Tauchlackierung ist die Erzielung einer konstanten Schichtdicke selbst nach längerem Gebrauch der Bäder zu nennen. Weiterhin lassen sich die Schichtstärken bis auf ca. 50 µm erhöhen, was wiederum eine Verbesserung der Beschichtung bedeutet. Die Schichtstärkeregulatoren werden im allgemeinen in Mengen von 0,2 bis 3, vorzugsweise 0,5 bis 2 %, bezogen auf den Badansatz, eingesetzt.

Primäre Monoamine haben die Formel $H_2N-R$, in der R ein verzweigter oder unverzweigter Alkyl- oder Alkoxyalkylrest mit 2 - l8 C-Atomen, vorzugsweise 2 - l4 C-Atomen im Alkylrest ist. Weitere verwendbare Amine sind cycloaliphatische und araliphatische Monoamine mit bis zu l0 C-Atomen. Beispiele für erfindungsgemäß eingesetzte Amine sind n-Butylamin, n-Octylamin, Tridecylamin, Isotridecylamin, 3-Methoxypropylamin, 3-(2-Ethylhexoxy)propylamin, Cyclohexylamin, Benzylamin, 2-Phenylethylamin, 2-Methoxyphenylethylamin usw.

Cyclische Monocarbonate, die mit den Aminen unter Bildung einer Urethanbindung umgesetzt werden können sind z.B. solche, die eine l,2-Carbonatgruppe enthalten, wie Alkylencarbonate mit 2 bis l8, vorzugsweise 2 bis l2 C-Atomen in der Alkylengruppe z.B. Ethylencarbonat, Propylencarbonat, l,2-Butylencarbonat sowie solche cyclischen Carbonate, die durch Umsetzung von $CO_2$ mit beispielsweise folgenden Epoxiden erhalten werden: höhere aliphatische Epoxide wie Hexen-, Octen-, Dodecen- und Octadecen-l-oxid.

Weitere Carbonate, die erfindungsgemäß eingesetzt werden können, sind z.B. aus Epoxykomponenten hergestellt worden, die eine endständige l,2-Epoxygruppe aufweisen. Vorzugsweise sind dies solche Verbindungen, die eine substituierte oder nicht substituierte Glycidylethergruppe oder Glycidylestergruppe enthalten, z.B. n-Butylglycidylether, Ethylhexylglycidylether, Monoglycidylether höherer isomerer Alkohole. Beispiele für Glycidylester sind solche von aliphatischen oder aromatischen, gesättigten oder ungesättigten Monocarbonsäuren wie aliphatische Monocarbonsäuren mit 3 bis l8, vorzugsweise 3 bis l2 C-Atomen, Acryl säure, Methacrylsäure, Bensoesäure u.a. Ein sehr gebräuchlicher handelsüblicher Glycidylester ist eine Mischung gesättigter Monocarbonsäuren mit einer Kettenlänge von 9 bis ll Kohlenstoffatomen, hauptsächlich bestehend (ungefähr 94%) aus tertiären Säuren (Versaticsäureglycidylester).

Weiterhin geeignet sind Monoglycidylether von einwertigen Phenolen z.B. Phenol($C_6H_5OH$) sowie Alkylphenol mit l bis l8, vorzugsweise l bis l2 C-Atomen im verzweigten oder unverzweigten Alkylrest und mehrwertigen Alkoholen wie Ethylenglykol, Propylenglykol, Butylglykol, Neopentylglykol, kol, Hexylenglykol u.ä. beispielsweise Phenylglycidylether p-tert.-Butylphenylglycidylether, o-Kresylglycidylether.

Weitere Monoepoxide, die für die Umsetzung geeignet sind, werden in DE-A 3 529 263 und DE-A 360 602 beschrieben, in denen auch die Herstellung der hier verwendeten cyclischen Monocarbonate angeführt sind, worauf hiermit einschließlich der bevorzugten Ausführungsformen Bezug genommen wird.

In den nachfolgenden Beispielen bedeutet (T) Gewichtsteile und (%) Gewichtsprozent.

BEISPIELE

1. In einem 1-1-Reaktionsgefäß, versehen mit Rührer und Rückflußkühler wurden 199,4 T Tridecylamin vorgelegt und auf 80°C erhitzt. Anschließend wurden langsam 102 T Propylencarbonat zugetropft, so daß 90°C nicht überschritten wurden und das Reaktionsgut noch etwa 6 Stunden bei 80°C gehalten bis eine Aminzahl von ca. 10 erreicht wurde. Die erhaltene fast farblose viskose Flüssigkeit hatte einen Einbrennrückstand von 96 % (DIN 53 216, 1 h 125°C).

Die nachfolgenden Beispiele 2 bis 10 (gemäß Tabelle 1) wurden wie in Beispiel 1 beschrieben hergestellt.

Tabelle 1

| Beispiel | Amin | Menge (T) | Carbonat | Menge | Reaktionsprodukt fest | Reaktionsprodukt flüssig | Einbrennrückstand (%) |
|---|---|---|---|---|---|---|---|
| 2 | n-Octyl | 102 | Ethylen | 88 | – | + | 95 |
| 3 | Isotridecyl | 199.4 | Ethylen | 88 | – | + | 97 |
| 4 | $C_{18}$– | 270 | Propylen | 102 | + | – | 98 |
| 5 | $C_{12}$– | 193 | Propylen | 102 | + | – | 95 |
| 6 | n-Butyl | 102 | Versatic[1] | 401 | – | + | 96 |
| 7 | n-Octyl | 161 | Versatic[1] | 358 | – | + | 97 |
| 8 | Tridecyl | 209 | Versatic[1] | 301 | – | + | 94 |
| 9 | n-Octyl | 129 | Dodecen-1-oxid | 242 | – | + | 94 |
| 10 | n-Octyl | 129 | 2-Ethylhexyl-glycidylether | 230 | – | + | 97 |

[1] Versaticsäureglycidylester

Die Reaktionsprodukte wurden als Schichtstärkenregulatoren in KTL-Bädern eingesetzt. Hierzu wurden sie entweder den Materialien der Elektrophoresebäder vor deren Überführung ins Wasser - also den Lackpasten - zugegeben oder sie wurden allein bzw. im Gemisch mit wassermischbaren oder teilweise wassermischbaren Lösungsmitteln wie Ethylenglykolmonoethylether oder Methoxypropanol den fertigen KTL-Bädern (Tauchbäder) zugefügt. Es is also möglich, die Reaktionsprodukte sowohl in die Lackpasten einzuarbeiten als auch den Tauchbädern zuzusetzen.

Als Elektrophoresebäder wurden verschiedene bekannte Zusammensetzungen verwendet, beispielsweise das Bad gemäß dem Anwendungsbeispiel 1 der DE-A 3 4 17 441. Das eingesetzte aminhaltige Polymere wurde wie folgt hergestellt:

3,6 T Dimethylaminopropylamin
16,1 T 2-Ethylhexylamin        Mischung 1
79,2 T Ethylenglykolmonoethylether

Mischung 1 wurde in einem 2-1-Kolben, ausgestattet mit Rückflußkühler, Rührer und elektrischer Widerstandsheizung, auf eine Temperatur von ca. 143°C bis zum leichten Rückfluß erhitzt. 317 T Bisphenol A-Epoxidharz mit einem Epoxidäquivalentgewicht von 480 wurden in 136 T Ethylenglykolmonoethylether gelöst und bei 143°C langsam innerhalb 1 Stunde zu Mischung 1 zugetropft. Anschließend wurden 130 T epoxidiertes Sojaöl mit einem Epoxidäquivalent von 260 innerhalb einer Stunde bei 143°C zugetropft und das Gemisch danach noch 10 Stunden bei 142 °C gehalten. Es resultierte eine 70 %ige Lösung eines Epoxid-Amin-Adduktes in Ethylenglykolmonoethylether.

Die Härterkomponente des Elektrophoresebades wurde in zwei Stufen hergestellt:

Vorprodukt: In einem Reaktor wurden 2160 T Hydroxyethylacrylat mit einer Säurezahl<1, 3,8 T Zinkacetylacetonat, 422 T Diglykoldimethylether vorgelegt, auf 60°C erhitzt, 1636 T Toluylendiisocyanat langsam zugetropft und so lange bei 60°C gehalten, bis der Gehalt an -N=C=O Gruppierungen kleiner als 0,2 % war. Anschließend wurden 15 T Hydrochinon und 422 T Ethylenglykolmonoethylether zugesetzt. Es wurde ein 80 %iges, helles, viskoses Harz mit einem Doppelbindungsgehalt von 9,5 %, (bezogen auf die Lösung) erhalten.

Härter: 1016 T 80 %iges Vorprodukt, 10 T KOH, 30 %ig in Methanol, wurden in einem Reaktor vorgelegt, auf 80°C erhitzt und 132 T Malonsäuredimethylester langsam zugetropft, so daß 80°C nicht überschritten wurden. Bei 80°C wurde so lange gehalten, bis der Gehalt an Doppelbindungen -C=C- auf 4,2 % abgefallen ist. Die Reaktionsmischung wurde mit Ethylenglykolmonoethylether auf 80 % Festkörper verdünnt und mit 2,0 g Essigsäure versetzt, wobei ein viskoses, gelbliches Harz erhalten wurde.

Um zu demonstrieren, daß der Zusatz der Schichtstärkeregulatoren allgemein bei Elektrophoresebädern verschiedener Zusammensetzungen mit gleich guten Ergebnissen eingesetzt werden kann, wurden das Beispiel 6, Tabelle I der europäischen Patentanmeldung 0 0l2 463 und das Beispiel I C der europäischen Patentanmeldung 0 0l2 566 in die Untersuchungen mit einbezogen, wobei jeweils die angegebenen Badzusammensetzungen und Abscheidebedingungen berücksichtigt wurden.

Die Herstellung der Elektrophoresebäder wurde so durchgeführt, daß jeweils die Mengen der gegebenenfalls pigmentierten Epozid-Amin-Addukte mit den Angegebenen Mengen in Härter und Katalysatoren sowie der entsprechenden Säure und den gegebenenfalls zuzusetzenden Schichtstärkeregulatoren zunächst mit einem schnell laufenden Rührwerk homogenisiert und anschließend langsam mit deionisiertem Wasser versetzt wurden, bis der Festkörpergehalt der Elektrophoresebäder, jeweils den in den Beispielen angeführten Werten entsprach.

Zur elektrophoretischen Abscheidung wurden die entsprechenden Elektrophoresebäder in eine Kunststoffwanne mit einer Anode aus Edelstahl und einem als Kathode geschalteten Blech mit einer Zinkphosphat-Bonderschicht (Abstand Kathode zu Anode 5 cm, Kathoden-Anoden-Verhältnis I:l) eingefüllt und - nach einer Reifezeit der Bäder von 24 Stunden bzw. von 4 Wochen-die Abscheidung unter Anlegung einer Gleichspannung (s. Tabelle 2) während 2 Minuten vorgenommen. Die abgeschiedenen Filme wurden mit entsalztem Wasser abgespült und anschließend für 20 Minuten bei l80°C eingebrannt. Tabelle 2 zeigt auch die erhaltenen lacktechnischen Eigenschaften.

Tabelle 2 Einfluß der Schichtstärkeregulatoren auf die Schichtstärke

| Beispiel | Schichtstärke-regulator | | Abscheide-spannung | Abscheide-temperatur | Schichtstärke | | Korrosionsschutz auf Bonder 132, Unterrostung nach 600 h Salzsprühtest ASTM B 117-64 |
|---|---|---|---|---|---|---|---|
| | Menge (%) | aus Bsp. | | | nach 24 h | nach 4 Wochen Badalterung | |
| Bad entspr. Beisp. 11, DE- A 3 417 441, 14% Festkörper | | | | | | | |
| 11 (Vergl.) | – | – | 250 V | 28°C | 18 µm | 16 µm | ca. 1 mm |
| 12 | 1 | 1 | 250 V | 28°C | 30 µm | 30 µm | ca. 1 mm |
| 13 | 2 | 1 | 250 V | 28°C | ca. 50 µm | ca. 50 µm | ca. 1 mm |
| 14 | 2 | 6 | 250 V | 28°C | ca. 45 µm | ca. 42 µm | ca. 1 mm |
| 15 | 1,5 | 7 | 250 V | 28°C | ca. 40 µm | ca. 38 µm | ca. 1 mm |
| 16 | 1,2 | 9 | 250 V | 28°C | ca. 38 µm | ca. 38 µm | ca. 1 mm |
| 17 (Vergl.) | 1 | EGMHE* | 250 V | 28°C | ca. 28 µm | ca. 20 µm | ca. 1 mm |
| 18 (Vergl.) | 1 | Texanol** | 250 V | 28°C | ca. 30 µm | ca. 21 µm | ca. 1 mm |
| Bad entspr. Beisp. 6, Tab. 1, EP-Anm. 0 012 463, 10% Festkörper | | | | | | | |
| 19 (Vergl.) | – | – | 200 V | 28°C | 17 µm | 15 µm | 1–2 mm |
| 20 | 1 | 4 | 180 V | 28°C | 31 µm | 30 µm | 1–2 mm |
| 21 | 2 | 6 | 180 V | 28°C | 41 µm | 42 µm | 2 mm |
| 22 | 1 | 8 | 170 V | 28°C. | 28 µm | 28 µm | 1–2 mm |
| 23 (Vergl.) | 2 | EGMHE* | 180 V | 28°C | 35 µm | ca.20 µm | 1–2 mm |
| Bad entspr. Beisp. IC, EP-Anm. 0 102 566, 15% Festkörper | | | | | | | |
| 24 (Vergl.) | – | – | 100 V | 22°C | 15 µm | 15 µm | 2 mm |
| 25 | 1 | 1 | 100 V | 22°C | 27 µm | 26 µm | 2 mm |
| 26 | 1 | 2 | 100 V | 22°C | 23 µm | 22 µm | 2 mm |
| 27 (Vergl.) | 1 | Texanol** | 100 V | 22°C | 28 µm | 19 µm | 2 mm |

*) EGMHE = Ethylenglykolmonohexylether

**) Texanol = 2,2,4-Trimethylpentandiol-1,3-monoisobutyrat

Diskussion der Ergebnisse

Die Zusätze zur Schichtstärkeregulierung erwiesen sich bei allen geprüften KTL-Bädern als wirksam, unabhängig davon, wie die von der verschiedenen Herstellern stammenden Bindemittel zusammengesetzt waren. Während die Schichtstärken der Vergleichsbeispiele bei Zusatz von Lösungsmitteln nach einer Badalterung von 4 Wochen erheblich abnahm, blieben die mit den erfindungsgemäßen Schichtstärkeregulatoren versetzten Beispiele l2-l6, 20-22. und 25-26 in ihrer Schichtstärke hervorragend konstant.

Die Zugabe von 1 % der erfindungsgemäßen Substanzen zu den Elektrophoresebädern bewirkt eine wesentliche Schichtstärkenerhöhung gegenüber den Nullproben (Vergleichsbeispiele 11, 19 und 24). Wird diese Menge bis auf 2 % erhöht, resultieren Schichtstärken von bis zu 50 μm, die als Dickschichtbeschichtungen angesehen werden können. Höhere Einsatzmengen ergeben, wie weitere Versuche zeigten, keine bemerkenswerten Steigerungen der Schichtstärke.

Der Korrosionsschutz wurde durch die eingesetzten Schichtstärkeregulatoren nicht negativ beeinflußt, sondern verblieb auf den Werten, wie sie nach dem augenblicklichen Stand der Technik erreicht werden.

## Patentansprüche

1. Verwendung eines Reaktionsprodukteshergestellt aus primären Monoaminen und cyclischen Monocarbonaten im Molverhältnis 1:0,8 bis 0,8:1 unter Ausbildung einer Urethanbindung als Mittel zur Einstellung einer konstanten Schichtdicke bei der kathodischen Elektrotauchlackierung.

2. Verwendung nach Anspruch 1, dadurch gekennzeichnet, daß das Reaktionsprodukt aus stöchiometrischen Mengen an Amin und Carbonat besteht.

3. Verwendung nach Anspruch 1 oder 2, dadurch gekennzeichnet, daß das primäre Monoamin die Formel $H_2N-R$ hat, in der R ein verzweigter oder ein unverzweigter Alkyl- oder Alkoxyalkylrest mit 2 - 18, vorzugsweise 2 - 14 C-Atomen im Alkylrest ist.

4. Verwendung nach Anspruch 1 oder 2, dadurch gekennzeichnet, daß das Monoamin ein cycloaliphatisches oder araliphatisches Amin mit bis zu 10 C-Atomen ist.

5. Verwendung nach einem oder mehreren der Ansprüche 1 bis 4, dadurch gekennzeichnet, daß das Monocarbonat ein Alkylencarbonat mit 2 bis 18 C-Atomen in der Alkylengruppe oder ein solches ist, das aus Verbindungen hergestellt worden ist, die eine substituierte oder nicht substituierte Glycidylester- oder Glycidylethergruppe enthalten.

6. Verwendung nach einem oder mehreren der Ansprüche 1 bis 5, dadurch gekennzeichnet, daß als Amin n-Butyl-, n-Octyl-, Tridecyl-, Isotridecyl-, $C_{12}$-, $C_{18}$-Amin und als Carbonat Ethylen-, Propylencarbonat, das Carbonat des Dodecen-1-oxids, des 2-Ethylenhexylglycidylethers oder des Versaticsäureglycidylesters eingesetzt wird.

7. Verwendung nach einem oder mehreren der Ansprüche 1 bis 6, dadurch gekennzeichnet, daß das Reaktionsprodukt in Mengen von 0,2 bis 3, vorzugsweise 0,5 bis 2 %, bezogen auf den Badansatz eingesetzt wird.

8. Lackpasten, enthaltend Reaktionsprodukte aus primären Monoaminen und cyclischen Monocarbonaten im Molverhältnis von 1:0,8 bis 0,8:1 mit einer Urethanbindung als Mittel zur Einstellung einer konstanten Schichtdicke bei der kathodischen Elektrotauchlackierung.

9. Tauchbäder, enthaltend Reaktionsprodukte aus primären Monoaminen und cyclischen Monocarbonaten im Molverhältnis von 1:0,8 bis 0,8:1 mit einer Urethanbindung als Mittel zur Einstellung einer konstanten Schichtdicke bei der kathodischen Elektrotauchlackierung.

## Claims

1. The use of a reaction product prepared from primary monoamines and cyclic monocarbonates in the molar ratio 1:0.8 to 0.8:1, with the formation of a urethane bond, as agents for the production of a constant coating thickness in cathodic electrocoating.

2. The use as claimed in claim 1, wherein the reaction product comprises stoichiometric amounts of amine and carbonate.

3. The use as claimed in claim 1 or 2, wherein the primary monoamine has the formula $H_2N-R$, in which R is a branched or an unbranched alkyl or alkoxyalkyl radical having 2–18, preferably 2–14, carbon atoms in the alkyl radical.

4. The use as claimed in claim 1 or 2, wherein the monoamine is a cycloaliphatic or araliphatic amine having up to 10 carbon atoms.

5. The use as claimed in one or more of claims 1 to 4, wherein the monocarbonate is an alkylene carbonate having 2 to 18 carbon atoms in the alkylene group or is one which has been prepared from compounds which contain a substituted or non-substituted glycidyl ester or glycidyl ether group.

6. The use as claimed in one or more of claims 1 to 5, wherein n-butylamine, n-octylamine, tridecylamine, isotridecylamine, $C_{12}$-amine or $C_{18}$-amine is employed as amine and ethylene carbonate, propylene carbonate, the carbonate of dodecene 1-oxide, of 2-ethylenehexyl glycidyl ether or of Versatic acid glycidyl ester is employed as carbonate.

7. The use as claimed in one or more of claims 1 to 6, wherein the reaction product is employed in amounts from 0.2 to 3, preferably 0.5 to 2%, relative to the bath charge.

8. Coating pastes, containing reaction products of primary monoamines and cyclic monocarbonates in the molar ratio from 1:0.8 to 0.8:1, with a urethane bond, as agents for the production of a constant coating thickness in cathodic electrocoating.

9. Dip baths, containing reaction products of primary monoamines and cyclic monocarbonates in the molar ratio from 1:0.8 to 0.8:1, with a urethane bond, as agents for the production of a constant coating thickness in cathodic electrocoating.

## Revendications

1. Utilisation d'un produit de réaction, préparé à partir de monoamines primaires et de monocarbonates cycliques selon un rapport en moles de 1:0,8 à 0,8:1, de préférence selon le rapport 1:1, avec formation d'un composé uréthanne, pour obtenir en électrodéposition cathodique une épaisseur de couche constante.

2. Utilisation selon la revendication 1, caractérisée en ce que le produit de réaction est constitué de quantités stoechiométriques d'amine et de carbonate.

3. Utilisation selon la revendication 1 ou 2, caractérisée en ce que la monoamine primaire a la formule $H_2N-R$, où R est un radical alkyle ou alcoxyalkyle à chaîne droite ou ramifiée comportant dans le fragment alkyle de 2 à 18, de préférence de 2 à 14 atomes de carbone.

4. Utilisation selon la revendication 1 ou 2, caractérisée en ce que la monoamine est une amine cycloaliphatique ou araliphatique ayant jusqu'à 10 atomes de carbone.

5. Utilisation selon l'une ou plusieurs des revendications 1 à 4, caractérisée en ce que le monocarbonate est un carbonate d'alkylène ayant de 2 à 18 atomes de carbone dans le groupe alkylène, ou encore un monocarbonate qui a été préparé à partir de composés contenant un groupe ester glycidylique ou glycidyléther substitué ou non-substitué.

6. Utilisation selon l'une ou plusieurs des revendications 1 à 5, caractérisée en ce qu'on utilise comme amine la n-butylamine, la n-octylamine, la tridécylamine, l'isotridécylamine, la (alkyle en $C_{12}$)-amine, la (alkyle en $C_{18}$)-amine, et comme carbonate du carbonate d'éthylène ou de propylène, le carbonate de dodécène-1-oxyde, du 2-éthylhexylglycidyléther ou de l'ester glycidylique de l'acide Versatic.

7. Utilisation selon l'une ou plusieurs des revendications 1 à 6, caractérisée en ce que le produit de réaction est utilisé en des quantités de 0,2 à 3, de préférence de 0,5 à 2% par rapport au bain.

8. Pâtes, contenant des produits de la réaction de monoamines primaires et de monocarbonates cycliques selon un rapport en moles de 1:0,8 à 0,8:1, avec formation d'un uréthanne, comme produits pour ajuster une épaisseur de couche constante en électrodéposition cathodique.

9. Bains d'immersion, contenant des produits de la réaction de monoamines primaires et de monocarbonates cycliques selon un rapport en moles de 1:0,8 à 0,8:1, avec formation d'un uréthanne, comme produits pour ajuster une épaisseur de couche constante en électrodéposition cathodique.